# EUROPEAN PATENT APPLICATION

(11) **EP 3 451 619 A1**
(43) Date of publication of application: **06.03.2019**
(21) Application number: 18192035.6
(22) Date of filing: 31.08.2018
(51) Int. Cl.: H04L 29/06, G06F 21/34, G06F 21/41, G06Q 20/34

(54) **METHOD AND SYSTEM FOR AUTHENTICATING AN OPERATION**

(30) Priority: 31.08.2017 EP 17188786
(71) Applicant: bunq B.V., 1043 BS Amsterdam (NL)
(72) Inventor: VAN LEEUWEN, Geert-Jan, 1043 BS Amsterdam (NL); DE WIT, Patrick, 1043 BS Amsterdam (NL); GURETZKI, Alexander, 1043 BS Amsterdam (NL); NIKNAM, Ali, 1043 BS Amsterdam (NL)
(74) Representative: Engelfriet, Arnoud Peter

(57) **Abstract**

A computer-implemented method of authenticating an operation using a smart card, the smart card comprising respective information elements for authenticating respective ones of plural operations, each information element being associated with a respective security element, the method comprising (a) receiving an input from a user, (b) attempting to validate the input for each of the respective security elements, and (c) upon successful validation with one of the respective security elements, authenticating the operation using the information element for the one of the plural operations with which said one of the respective security elements is associated. Also a device, a smart card and a computer program.

## Description

### FIELD OF THE INVENTION

The invention relates to a computer-implemented method of authenticating an operation using a smart card, the smart card comprising respective information elements for authenticating respective ones of plural operations, each information element being associated with a respective security element. The invention further relates to a corresponding device, smart card and computer program product.

### BACKGROUND OF THE INVENTION

Smart cards such as bank cards, credit cards and access control cards are very much prevalent in today's society. With advanced authentication chips and protocols they provide day-to-day access control to all kinds of valuable goods and services, from bank accounts to buildings. The cards are controlled using security elements such as personal identification codes, passwords or even biometric identification means. Only a person knowing or having such element can use the card in question.

A downside of this prevalence is that an average person typically has to carry around multiple cards. For example, one may have a debit card for access to one's bank account, a credit card for making payments in stores, a third card for paying for gas, a fourth card for public transport, and so on. Some banks may even issue different cards for different sub-accounts of one bank account.

As a result, efforts have been made into creating cards that provide access to different services. However, an issue with such cards is a more complex authentication of the user and/or the account or service with which it is associated. In particular, when the card is inserted into a card reader or presented at a contactless reader spot, which account or service is intended?

Thus, there is a need for an improved smart card and method of authentication using a smart card in which this issue is addressed.

### SUMMARY OF THE INVENTION

The invention provides for a computer-implemented method of authenticating an operation using a smart card, the smart card comprising respective information elements for authenticating respective ones of plural operations, each information element being associated with a respective security element, the method comprising (a) receiving an input from a user, (b) attempting to validate the input for each of the respective security elements, and (c) upon successful validation with one of the respective security elements, authenticating the operation using the information element for the one of the plural operations with which said one of the respective security elements is associated.

The invention thus addresses the above issue through an innovative use of the security elements, which can be personal identification numbers, passwords, biometric information elements and so on. The card is associated with multiple operations, which may range from access to accounts such as banking or payment or to other services, to proving identity, supplying information or confirming an order. Each operation has a respective information element, such as a user identifier, a secret code and so on, and each such information element is to be authenticated with a respective security element such as a personal identification number, a password or a biometric information element.

In the invention, the user of the card wants to perform an operation requiring authentication, such as authenticating a user, authenticating a device and authenticating a transaction. To this end, the user presents the card to some reader suited for the purpose and provides an input such as a personal identification number, password or biometric information element. Validation is attempted for each of the respective security elements, e.g. as a comparison of an entered code against a stored code or through the use of hashing or other functions known or invented in the future for validating input against stored security codes. Upon successful validation, the operation associated with the security element in question is authenticated. This provides for a clear technical implementation that addresses the above issue. No need for a separate selection of an operation.

The invention further provides for a computer-readable storage medium comprising executable code for causing a computer to operate as the system of the invention.

### BRIEF DESCRIPTION OF THE FIGURES

The invention will now be explained in more detail with reference to the figures, in which:
Fig. 1 schematically illustrates the system of the invention;
Fig. 2 schematically illustrates the method of the invention;

In the figures, same reference numbers indicate same or similar features. In cases where plural identical features, objects or items are shown, reference numerals are provided only for a representative sample so as to not affect clarity of the figures.

### DETAILED DESCRIPTION OF CERTAIN EMBODIMENTS

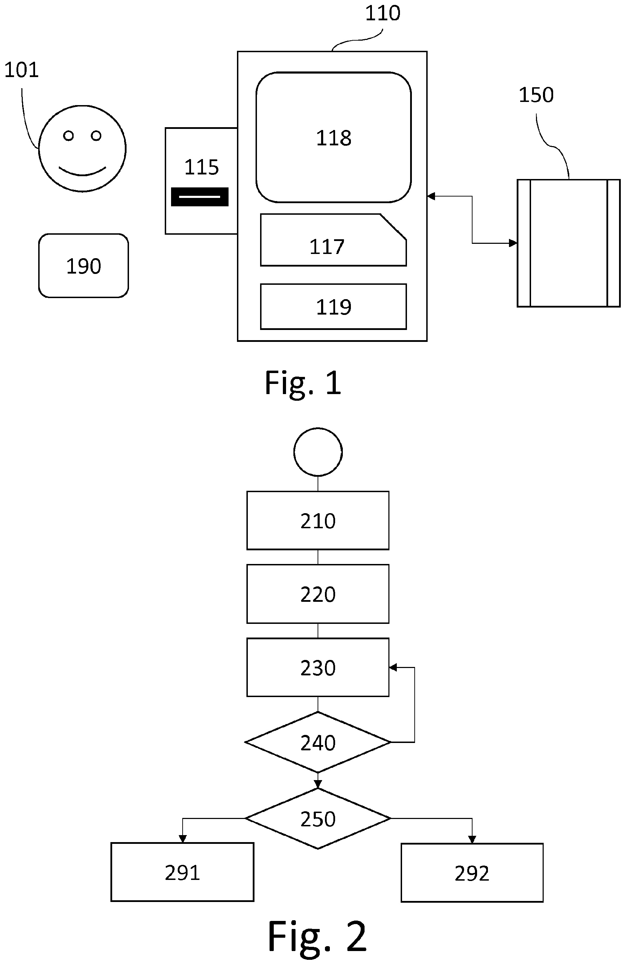

Fig. 1 schematically illustrates the system of the invention in general. The system is deployed situations where a person 101 wants to perform an operation requiring authentication, which operation in the embodiment as illustrated involves a money withdrawal at an automated teller machine 110, but could be any other operation, e.g. opening a secure door or proving identity at a building entrance. More generally speaking, authentication is one of: authenticating a user, authenticating a device and authenticating a transaction.

Authentication involves in the embodiment as illustrated a server 150, but may alternatively be performed client-side, which in this embodiment could be realized as authentication in the automated teller machine 110.

To perform the authentication, the person 101 is in the possession of a smart card 190 suitable for being read by a reader 115 coupled to automated teller machine 110. Automated teller machine 110 further comprises an input module 117, in the embodiment as illustrated a numeric keypad but could also be a full alphanumerical keyboard, a fingerprint reader, a retina scanner and so on. The automated teller machine 110 further comprises a display 118 for displaying output, and processing unit 119 for performing various operations.

Fig. 2 schematically illustrates the computer-implemented method of the invention. As noted above, the person 101 is in possession of smart card 190 and in step 210 presents this card 190 to the reader 115 suited for the purpose. Next, in step 220 the person 101 employs the input module 117 to provide an input such as a personal identification number, password or biometric information element.

According to the invention, the card 190 is associated with multiple operations, which may range from access to accounts such as banking or payment or to other services, to proving identity, supplying information or confirming an order. Each operation has a respective information element, such as a user identifier, a secret code and so on, and each such information element is to be authenticated with a respective security element such as a personal identification number, a password or a biometric information element.

In step 230, validation is attempted for a first of the respective security elements, e.g. as a comparison of an entered code against a stored code or through the use of hashing or other functions known or invented in the future for validating input against stored security codes. In the embodiment of Fig. 1 the entered code is sent to the server 150 for the comparison and the result is returned. Of course, the validation can also be performed simultaneously for all elements.

In step 240, the result is checked and upon failure the method returns to step 230 to attempt validation for a further of the respective security elements or proceeds to step 250 if no further element is available.

Upon successful validation, the operation in step 250 associated with the security element in question is authenticated and the method ends. Upon failure, the operation in step 250 is refused.

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail.

Some or all aspects of the invention may be implemented in a computer program product, i.e. a collection of computer program instructions stored on a computer readable storage device for execution by a computer. The instructions of the present invention may be in any interpretable or executable code mechanism, including but not limited to scripts, interpretable programs, dynamic link libraries (DLLs) or Java classes. The instructions can be provided as complete executable programs, as modifications to existing programs or extensions ("plugins") for existing programs. Moreover, parts of the processing of the present invention may be distributed over multiple computers or processors for better performance, reliability, and/or cost.

Storage devices suitable for storing computer program instructions include all forms of non-volatile memory, including by way of example semiconductor memory devices, such as EPROM, EEPROM, and flash memory devices, magnetic disks such as the internal and external hard disk drives and removable disks, magneto-optical disks and CD-ROM disks. The computer program product can be distributed on such a storage device, or may be offered for download through HTTP, FTP or similar mechanism using a server connected to a network such as the Internet. Transmission of the computer program product by e-mail is of course also possible.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

## Claims

1. A computer-implemented method of authenticating an operation using a smart card, the smart card comprising respective information elements for authenticating respective ones of plural operations, each information element being associated with a respective security element, the method comprising (a) receiving an input from a user, (b) attempting to validate the input for each of the respective security elements, and (c) upon successful validation with one of the respective security elements, authenticating the operation using the information element for the one of the plural operations with which said one of the respective security elements is associated.

2. The method of claim 1, in which the operation is one of: authenticating a user, authenticating a device and authenticating a transaction.

3. The method of claim 1, in which the input is one of: a personal identification number, a password, a biometric information element.

4. The method of claim 1, in which the attempting to validate is performed in one of a client-side apparatus and a server-side apparatus.

5. A device configured for causing a computer to perform the method of claim 1.

6. A smart card for use in the method of claim 1.

7. A computer-readable storage medium comprising executable code for causing a computer to operate as the device of claim 5.
